(19) Europäisches Patentamt
European Patent Office
Office européen des brevets

(11) **EP 1 909 398 B1**

(12) **EUROPEAN PATENT SPECIFICATION**

(45) Date of publication and mention
of the grant of the patent:
**08.12.2010  Bulletin 2010/49**

(51) Int Cl.:
**H04B 1/10** (2006.01)

(21) Application number: **06425683.7**

(22) Date of filing: **06.10.2006**

(54) **Detection and suppression of multipath in a received broadcast signal using the Teager-Kaiser Operator**

Detektion und Unterdrückung von Mehrwegsignalen in einem empfangenen Rundfunksignal durch die Benutzung eines Teager-Kaiser Operators

Détection et suppression de signaux à trajets multiples dans un signal de radiodiffusion reçu par l'utilisation de l'opérateur Teager-Kaiser

(84) Designated Contracting States:
**DE FR GB IT**

(43) Date of publication of application:
**09.04.2008  Bulletin 2008/15**

(73) Proprietor: **STMicroelectronics Srl**
**20041 Agrate Brianza (MB) (IT)**

(72) Inventor: **Adduci, Francesco**
**20041 Agrate Brianza (MB) (IT)**

(74) Representative: **Perani, Aurelio et al**
**Perani Mezzanotte & Partners**
**Piazza San Babila, 5**
**20122 Milano (IT)**

(56) References cited:
**US-A1- 2004 266 357**

• **BALASUBRAMANIAM SANTHANAM ET AL: "Multicomponent AM-FM Demodulation via Periodicity-Based Algebraic Separation and Energy-Based Demodulation" IEEE TRANSACTIONS ON COMMUNICATIONS, IEEE SERVICE CENTER, PISCATAWAY, NJ, US, vol. 48, no. 3, March 2000 (2000-03), pages 473-490, XP011010807 ISSN: 0090-6778**

• **BALU SANTHANAM: "Multicomponent AM--FM Energy Demodulation with Applications to Signal Processing and Communications."[Online] 1 November 1997 (1997-11-01), pages 1-165, XP002423027 Retrieved from the Internet: URL: http://web.archive.org/web/20050106001 141/http://www.eece.unm.edu/faculty/bsanth an/ > [retrieved on 2007-02-02]**

• **LIPSEY M J ET AL: "On the Teager-Kaiser energy operator low frequency error" THE 2002 45TH. MIDWEST SYMPOSIUM ON CIRCUITS AND SYSTEMS. CONFERENCE PROCEEDINGS. TULSA, OK, AUG. 4 - 7, 2002, MIDWEST SYMPOSIUM ON CIRCUITS AND SYSTEMS, NEW YORK, NY : IEEE, US, vol. VOL. 1 OF 3, 4 August 2002 (2002-08-04), pages 53-56, XP010635495 ISBN: 0-7803-7523-8**

• **MARAGOS P ET AL: "ENERGY SEPARATION IN SIGNAL MODULATIONS WITH APPLICATION TO SPEECH ANALYSIS" IEEE TRANSACTIONS ON SIGNAL PROCESSING, IEEE SERVICE CENTER, NEW YORK, NY, US, vol. 41, no. 10, 1 October 1993 (1993-10-01), pages 3024-3051, XP000404067 ISSN: 1053-587X**

• **LOHAN, E.-S.; HAMILA, R.; RENFORS, M.: "Performance analysis of an efficient multipath delay estimation approach in a CDMA multiuser environment" 12TH IEEE INTERNATIONAL SYMPOSIUM ON PERSONAL, INDOOR AND MOBILE RADIO COMMUNICATIONS, 2001, 3 October 2001 (2001-10-03), pages A6-A10, XP002421359**

- **RIDHA HAMILA ET AL: "Subchip Multipath Delay Estimation for Downlink WCDMA System Based on Teager-Kaiser Operator" January 2003 (2003-01), IEEE COMMUNICATIONS LETTERS, IEEE SERVICE CENTER, PISCATAWAY, NJ, US , XP011066475 ISSN: 1089-7798 \* abstract \* \* paragraph [000l] \* \* paragraph [00ll] \***

**Description**

The present invention refers to a method and an apparatus for suppressing the presence of multipath propagation in a broadcast signal.

The present invention moreover refers to a radio receiver using said apparatus.

In terrestrial broadcasting systems, the signals emitted from a transmission antenna often arrive to a reception antenna not only through a direct transmission antenna to reception antenna path, but also through many other paths.

Therefore, the reception antenna does not receive a single signal, but many signals.

This is due to the fact that the transmitted signal follows several different paths due to the reflections to which such signal is subjected. Indeed, during their propagation the transmitted signals are subjected to reflections which are caused by objects present in the broadcasting zone.

The signals which arise from such reflections are called multipath signals.

In reality, the signals received by the reception antenna reach in different times, are not in phase and do not have the same intensity, since the objects present in the broadcasting zone can be fixed in time and space, such as buildings, and/or can be movable, such as airplanes.

The signals, moreover, are combined with each other when they reach the reception antenna in a constructive or destructive manner, and the overall resulting effect is that the level of the input signal at the receiver varies considerably.

Essentially, the signal reaching the receiver is a combination of the source signal and the replicas of such source signal, each having different courses, delays and displacements.

There is hence the great need for suppressing the multipath propagation in the broadcast signal.

The effects of multipath propagation, therefore, must be at least theoretically suppressed or at least reduced during the demodulation process so to permit a correct reconstruction of the broadcast signal.

For example, the document US 2004/0042571 describes a system for suppressing the presence of multipath propagation in a broadcast signal.

Such system, even if certain advantageous features are present, nevertheless requires numerous circuit components and the implementation of specific software which is particular burdensome from the standpoint of computational complexity, with the consequence of having to employ high memory quantities.

Further examples of systems for suppressing the presence of multipath propagation in a broadcast signal are described in documents US 2005/0276365 and EP 1259009.

In view of the described state of the art, the object of the present invention is that of achieving a method and apparatus for suppressing the presence of multipath propagation in a broadcast signal which is free of the problems of the prior art as indicated above.

Further object of the present invention is that of achieving a receiver with a simple structure and with a reduced number of components which is capable of reducing at the same time the overall cost of the receiver.

In accordance with the present invention, such object is achieved by means of a method for suppressing the presence of multipath propagation in a broadcast signal, in accordance with claim 1.

Such object is also achieved by means of an apparatus for suppressing the presence of multipath propagation in a broadcast signal in accordance with claim 8.

Furthermore, such object is also achieved by means of a receiver provided with an apparatus for suppressing the presence of multipath propagation in a broadcast signal in accordance with claim 13.

Furthermore such object is also achieved by a portable multimedia device provided with a receiver having the apparatus for suppressing the presence of multipath propagation in a broadcast signal in accordance with claim 14.

Finally, such object is also achieved by means of a computer product which, when loaded in the memory of a processor and running on such processor, permits actuating the method in accordance with the present invention.

Due to the present invention, it is possible to obtain a method and an apparatus capable of suppressing the presence of multipath propagation by using simpler instructions with respect to the prior art.

Moreover, it is possible to obtain an apparatus capable of suppressing the presence of multipath propagation in order to reconstruct the originally transmitted signal free of multipath noise, employing a lower number of components and smaller-size memory elements.

A further advantageous feature of the present invention is that of obtaining a radio receiver equipped with the apparatus for suppressing the presence of multipath propagation whose cost of production and achievement is considerably less with respect to the prior art radio receivers.

The characteristics and advantages of the present invention will be evident from the following detailed description of a practical embodiment, illustrated as a non-limiting example in the drawings, in which:

- Figure 1 shows an explanatory diagram of the method and apparatus 1 for suppressing the presence of multipath propagation in a broadcast signal, in accordance with the present invention;
- Figure 2 shows a block diagram of a possible embodiment of a circuit of the apparatus illustrated in figure 1.

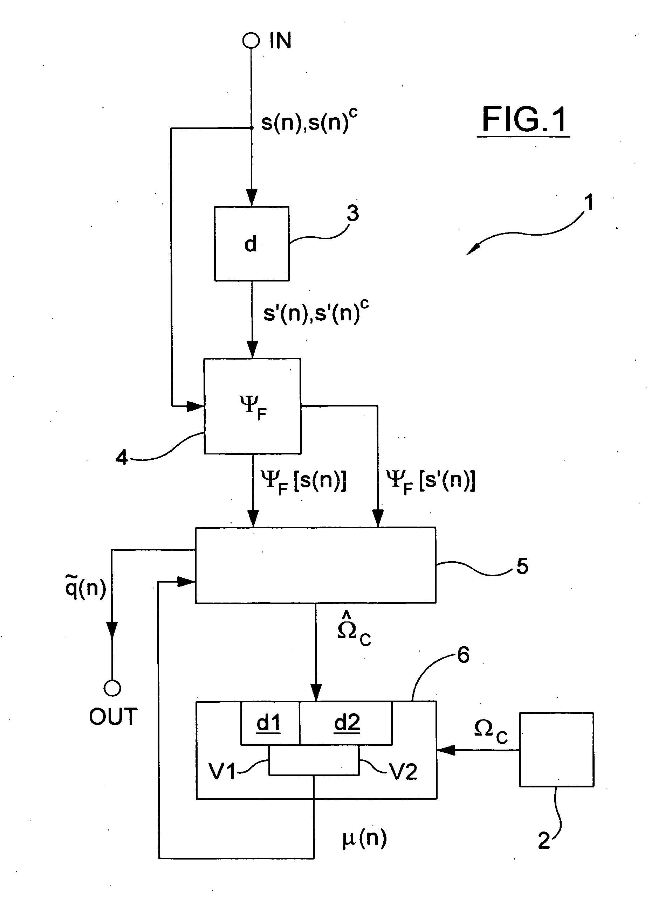

With reference to figure 1, in which the explanatory diagram of the method and apparatus 1 for suppressing the presence of multipath propagation in a received signal s(n), s(n)$^c$ is shown, it is noted that such apparatus 1 comprises an input terminal IN and an output terminal OUT, which are respectively associable to a front end and a back end of a receiver (not illustrated in the figure), as described in more detail below.

It should be indicated that in such figure 1, only the elements necessary for understanding the operation and achievement of the present invention were illustrated. The man skilled in the art will be capable of understanding which other elements are necessary, how to design, implement and connect them with the other elements in order to make a complete diagram of a receiver.

Before proceeding with the description of the invention, it should be underlined that the signal s(n), s(n)$^c$ received from the receiver is an FM modulated digital signal corrupted by the presence of time-varying multipath propagation, whose representation can be obtained by assuming that:

- the transmitted digital signal x(n) is a modulated digital signal composed of a carrier signal oscillating at a carrier frequency $f_c$ and a modulating signal which is generically expressible with the following formula:

$$x(n) = a(n) \cdot \cos\left(\Omega_c \cdot n + \Omega_m \cdot \int_0^n q(v) \cdot dv + \phi\right)$$

where a(n) represents the AM modulating signal component with time varying envelope $|a(n)|$, $\vartheta(n) = \Omega_c + \Omega_m \cdot q(n)$ represents the instantaneous angular frequency, q(n) the FM modulating signal component where $|q(n)| \leq 1 \ \forall \ n \in \{l \geq 0\}$ $0 \leq \Omega_c \pm \Omega_m \leq \pi$, $\Omega_m$ is the angular frequency deviation, $\Omega_c$ is the angular frequency of the carrier signal and "n" the number of samples of the transmitted digital signal;

- the signal s(n), s(n)$^c$ is a combination of the source signal x(n) and replicas of this source signal $x_0(n)$, $x_1(n)$, $x_2(n)$, $x_i(n)$ etc. each having different courses, delays and displacements, which is expressible with the following Cartesian notation:

$$s(n) = \left(r_0 + \sum_{i=1}^{N} r_i \cdot e^{-j \cdot (\Omega_c \cdot n \cdot \tau_1 + \Omega_c \cdot \chi_1)}\right) \cdot a(n) \cdot \cos\left(\Omega_c \cdot n + \Omega_m \cdot \int_0^n q(v) \cdot dv + \phi\right)$$

or, using the complex notation, by means of the following formula:

$$s(n)^C = \left(r_0 + \sum_{i=1}^{N} r_i \cdot e^{-j \cdot (\Omega_c \cdot n \cdot \tau_1 + \Omega_c \cdot \chi_1)}\right) \cdot a(n) \cdot e^{j \cdot (\Omega_c \cdot n + \Omega_m \cdot \int_0^n q(v) \cdot dv + \phi)}$$

where:

- $r_0$ represents the attenuation of the transmitted signal $x_0(n)$, $r_i$ represents the attenuation of the ith transmitted signal $x_i(n)$,
- $\chi_i$ represents the spatial delay, related to the larger/smaller path with respect to the main path which the ith transmitted signal $x_i(n)$ underwent, and
- $\tau_i$ the time delay - assuming that the delay of the signal on the main path is null - of the ith transmitted signal $x_i(n)$.

It should be pointed out that, in the course of the present description, use will be made of the non-linear Teager-Kaiser operator (or function) which is, for example, described in the document "On a Simple Algorithm to Calculate the Energy of a Signal," by James F. Kaiser, PROC. ICASSP, Vol. S7.3, pps. 381-384, 1990, incorporated here for reference.

The non-linear Teager-Kaiser operator is therefore an algorithm capable of calculating the "energy" of a signal.

Such algorithm therefore produces, as a result of its processing, a value which has been shown to be directly correlated to the "energy" of the signal being analysed.

The definition of non-linear Teager-Kaiser operator is illustrated below in order to make the subsequent description of the invention clearer.

The non-linear Teager-Kaiser operator is defined by the following relation (1):

$$\Psi\left[x(n\cdot T)\right]=\left(\frac{\partial}{\partial(n\cdot T)}x(n\cdot T)\right)^2 - x(n\cdot T)\cdot\left(\frac{\partial^2}{\partial(n\cdot T)^2}x(n\cdot T)\right)$$

where x(nT) represents a discrete time-varying signal defined by a plurality of samples.

Using the general property of the derivatives in the discrete domain and maintaining the coherence between the samples with the primitive function and its derivatives, it is possible to obtain, by removing the notion of the time T, that:

$$\overset{\circ}{x}(n)=\frac{x(n+1)-x(n-1)}{2}$$

or

$$\overset{\circ}{x}(n)=x(n+1)-x(n)$$

and

$$\overset{\circ\circ}{x}(n)=x(n+1)+x(n-1)-2\cdot x(n)$$

thus to be able to rewrite (1) in the more compact forms, illustrated below (2):

$$\Psi\left[x(n)\right]=\left[x(n+1)-x(n)\right]^2 - x(n+1)\cdot\left[x(n+1)+x(n-1)-2\cdot x(n)\right]$$

or (3):

$$\Psi\left[x(n)\right]=\left[x(n)\right]^2 - x(n+1)\cdot x(n-1)$$

That stated, the method in accordance with the present invention for suppressing the presence of multipath propagation in the modulated digital signal s(n), s(n)$^c$, comprises the steps of:

- providing at least one first value $\Omega_c$ of channel angular frequency, representative of said modulated digital signal s(n), s(n)$^c$ free of multipath propagation,
- providing at least one second value $\hat{\Omega}_c$ of said channel angular frequency, representative of said modulated digital signal s(n), s(n)$^c$, <u>with multipath propagation</u>,
- comparing said at least one first value $\Omega_c$ with said at least one second value $\hat{\Omega}_c$ thus to detect the presence of multipath propagation in said modulated digital signal s(n), s(n)$^c$.

In particular, the step of generating said at least one second value $\hat{\Omega}_c$ comprises the steps of:

- processing said modulated digital signal s(n), s(n)$^c$ to obtain a derivative signal s'(n),s'(n)$^c$ representative of the derivative of said digital signal s(n), s(n)$^c$,
- applying a non-linear Teager-Kaiser function $\Psi$ to said modulated digital signal s(n),s(n)$^c$ to generate a first signal $\Psi$[s(n),s(n)$^c$] representative of the energy of said digital signal s(n), s(n)$^c$,

- applying said non-linear Teager-Kaiser function $\Psi$ to said derivative signal s'(n),s'(n)$^c$ to generate a second signal $\Psi$[s'(n),s'(n)$^c$] representative of the energy of said derivative signal s'(n),
- processing said first signal $\Psi$[s(n),s(n)$^c$] and said second signal $\Psi$[s'(n),s'(n)$^c$] to generate said at least one second value $\hat{\Omega}_c$.

The comparing step also comprises the step of calculating the ratio between said at least one second value $\hat{\Omega}_c$ and said at least one first value $\Omega_c$, said ratio identifying a parameter $\mu$(n) capable of detecting the presence of multipath propagation in said modulated digital signal s(n), s(n)$^c$ when said calculated ratio is less than 1.

The parameter $\mu$(n), also called multipath coefficient, indicates the quantity of the multipath contribution present in the antenna signal.

In particular, the parameter $\mu$(n) is calculated in accordance with the following formula (4):

$$\mu(n) = \frac{1 - \cos\left(2 \cdot \hat{\Omega}_c\right)}{1 - \cos\left(2 \cdot \Omega_c\right)}$$

where:

- said second value $\hat{\Omega}_c$ is calculated by applying the following formula (5):

$$\hat{\Omega}_c = \frac{1}{N} \cdot \sum_{n=1}^{N} \frac{1}{2} \cdot \arccos\left(1 - \frac{\Psi_F\left[s(n+1) - s(n-1)\right]}{2 \cdot \Psi_F\left[s(n)\right]}\right)$$

N being the number of samples to be analysed, $\Psi$[s(n)] corresponds to said first signal, and

$$\frac{1}{2} \cdot \Psi\left[s(n+1) - s(n-1)\right]$$

corresponds to said second signal;

- $\Omega_c$ is the channel angular frequency, which is known since it is set by the user in the reception step.

It should be indicated that, in the absence of multipath, the parameter $\mu$(n) is equal to one.

In formula (5), for the calculation of the second value $\hat{\Omega}_c$, only the Cartesian notation of the signal received at the receiver (i.e. s(n)) was used for exposure simplicity, but the complex notation (i.e. s(n)$^c$) could also be used to obtain analogous results.

To calculate the second value $\hat{\Omega}_c$, it is nevertheless necessary to establish the value of the number N of samples to be analysed, a value which varies as a function of the precision $f_{prec}$ with which it is desired to calculated the value of the carrier frequency $f_c$, where

$$f_{prec} \leq \frac{2 f_m}{\Omega_q N}$$

From the above expressions, it is obtained that the number of samples N must satisfy the relation:

$$N \leq \frac{2 f_m}{\Omega_q f_{prec}}$$

in which:

- $f_m$ is known is equal to the frequency deviation of the modulating signal in an FM transmission, typically equal to 75 KHz,
- $\Omega_q$ is known and is equal to the angular bandwidth of the FM modulating signal in an FM transmission, typically equal to 15 KHz,
- $f_{prec}$ is set by the user.

In other words, the parameter $\mu$(n) is used, by means of the processing step of said first signal $\Psi$[s(n)] and said second signal $\Psi$[s'(n)], in the extraction calculation of a first "non-equalised" signal $\hat{q}(n)$ representative of the waveform of said modulating signal q(n) by applying the following formula (6):

$$\hat{q}(n) \cong \frac{1}{2 \cdot \Omega_m} \cdot \arccos\left\{\mu(n) \cdot \left[\frac{1 - \mu(n)}{\mu(n)} + \cos\left(2 \cdot \Omega_c + 2 \cdot \Omega_m \cdot q(n)\right)\right]\right\} - \frac{\Omega_c}{\Omega_m}$$

where:

- $\Omega_c$ is said first value which corresponds to the supplied angular frequency which is known since it is, for example, set by the user in the reception step;
- $\mu$(n) is the multipath coefficient;
- q(n)·$\Omega_m$ is the ideal signal representative of the waveform of said modulating signal q(n).

It should be said that the method according to the invention, in addition to identifying the presence of multipath propagation by means of the processing of the multipath coefficient $\mu$(n), is also capable of processing the first non-equalised signal $\hat{q}(n)$.

Nevertheless, such first non-equalised signal $\hat{q}(n)$ must be a non-usable signal in the back end of the receiver since it is affected by multipath propagation.

In order to obtain a usable signal in the back end of the receiver, the multipath coefficient $\mu$(n) is advantageously used, in accordance with the present invention, to generate a second equalised signal $\tilde{q}(n)$ representative of the waveform of said modulating signal q(n) by applying the following formula (7):

$$\tilde{q}(n) \approx \frac{1}{2 \cdot \Omega_m} \cdot \arccos_\mu\left[1 - \mu(n) + \mu(n) \cdot \cos\left(2 \cdot \Omega_c + 2 \cdot \Omega_m \cdot q(n)\right)\right] - \frac{\Omega_c}{\Omega_m}$$

where

- $\Omega_c$ is said first value which corresponds to the angular frequency of supplied carrier frequency ($f_c$);
- $\mu$(n) is the multipath coefficient;
- $\arccos_\mu$ is the modified arc cosine, which depends on the value of $\mu$(n) and which solves the equation $\alpha \equiv \arccos_\mu$ (1 - $\mu$ + $\mu \cdot \cos\alpha$);
- q(n)*$\Omega_m$ is said ideal signal representative of the waveform of said modulating signal q(n).

The method according to the invention, therefore, in addition to permitting identifying the presence of multipath propagation, processing the parameter $\mu$(n), is also capable of processing such second equalised signal $\tilde{q}(n)$, which is a signal usable in the back end of the receiver.

Advantageously, the back end of the receiver receives said second equalised signal $\tilde{q}(n)$, in which the multipath propagation present in the received signal s(n), s(n)$^c$ was substantially suppressed or drastically reduced.

In other words, said second equalised signal $\tilde{q}(n)$ is the "non-equalised" version of said first signal $\hat{q}(n)$, after the compensation has been executed of the presence of multipath propagation in said modulated digital signal s(n),s(n)$^c$.

In order to determine $\tilde{q}(n)$, it is sufficient to substitute the *arccos* function in the canonical extraction formula of frequency modulating signal (see formula (63) of the document "P. Maragos, J.F. Kaiser and T.F. Quatieri, "Energy Separation in Signal Modulations with Application to Speech Analysis", IEEE Trans. on Signal Proc., 41 (10): 3025-3051, Oct. 1993") with the *arccos*$_\mu$ function as in the following formula (8):

$$\tilde{q}(n)\cdot\Omega_m \cong \frac{1}{2}\cdot\arccos_\mu\left(1-\frac{\Psi[s(n+1)-s(n-1)]}{2\cdot\Psi[s(n)]}\right)-\Omega_c$$

where

- $\Psi[s(n)]$ corresponds to said first signal,

- $-\dfrac{1}{2}\cdot\Psi[s(n+1)-s(n-1)]$ corresponds to said second signal $\Psi[s'(n)]$

- $\Omega_c$ is said first value which corresponds to the angular frequency of supplied carrier frequency ($f_c$).

To support the result obtained with the above described method, the passages will be illustrated below for reaching the definition of the parameter $\mu(n)$, or:

$$\mu(n)=\frac{1-\cos(2\cdot\hat{\Omega}_c)}{1-\cos(2\cdot\Omega_c)}$$

Using, for example, the complex notation of the received modulated digital signal $s(n)^c$ described above, and applying the non-linear Teager-Kaiser function $\Psi$ to such modulated digital signal $s(n)^c$ and setting $\chi_0=0$ and $\tau_0=0$, one obtains that:

$$\Psi[s(n)^c]=\left[\left(r_0+\sum_{i=1}^{N}r_i\cdot e^{-j\cdot(\Omega_c\cdot n\cdot\tau_1+\Omega_c\cdot\chi_1)}\right)\cdot a(n)\cdot e^{j\cdot(\Omega_c\cdot n+\Omega_m\cdot\int_0^n q(v)\cdot dv+\phi)}\right]\approx$$

$$\approx 2\cdot a^2(n)\cdot\left[\begin{array}{l}\sum_{i=0}^{N}r_i^2\cdot\sin^2(\Omega_c+\Omega_m\cdot q(n)-\Omega_c\cdot\tau_i)+\\[2mm]+\sum_{\substack{i,k=0\\i\neq k}}^{N}2\cdot r_i\cdot r_k\cdot\cos[\Omega_c\cdot n\cdot(\tau_i-\tau_k)+\Omega_c\cdot(\chi_i-\chi_k)]\cdot\sin^2\left(\Omega_c+\Omega_m\cdot q(n)-\frac{\Omega_c\cdot(\tau_i-\tau_k)}{2}\right)\end{array}\right]$$

Such expression demonstrates that the energy of the modulated digital signal $s(n)^c$ is a linear combination of the energy of the replicas $x_0(n)$, $x_1(n)$, $x_2(n)$, $x_i(n)$ etc. of the source signal $x(n)$ following the reflections, attenuations and delays of each signal $x_0(n)$, $x_1(n)$, $x_2(n)$, $x_i(n)$ etc.

In order to determine the quality of the signal in the presence of multipath, it is necessary first of all to execute the derivative of the modulated digital signal $s(n)^c$ by obtaining the derivative signal $s'(n)^c$ and subsequently applying the non-linear function Teager-Kaiser $\Psi$ to such derivative digital signal $s'(n)^c$ by setting $\chi_0=0$ and $\tau_0=0$. It is therefore obtained that:

$$\Psi[\frac{\partial}{\partial n}s(n)^c]=\left[\frac{\partial}{\partial n}\left(r_0+e^{-j\cdot(\Omega_c\cdot n\cdot\tau_1+\Omega_c\cdot\chi_1)}\right)\cdot a(n)\cdot e^{j\cdot(\Omega_c\cdot n+\Omega_m\cdot\int_0^n q(v)\cdot dv+\phi)}\right]\approx$$

$$\approx 2\cdot a^2(n)\cdot\left[\begin{array}{l}\sum_{i=0}^{N}r_i^2\cdot\sin^4(\Omega_c+\Omega_m\cdot q(n)-\Omega_c\cdot\tau_i)+\\[2mm]+\sum_{\substack{i,k=0\\i\neq k}}^{N}2\cdot r_i\cdot r_k\cdot\cos[\Omega_c\cdot n\cdot(\tau_i-\tau_k)+\Omega_c\cdot(\chi_i-\chi_k)]\cdot\sin^4\left(\Omega_c+\Omega_m\cdot q(n)-\frac{\Omega_c\cdot(\tau_i-\tau_k)}{2}\right)\end{array}\right]$$

In view of the fact that the baseband signal $q(n)$ is given by the relation reported below:

$$q(n)\cdot\Omega_m \cong \frac{1}{2}\cdot\arccos\left(1 - \frac{\Psi\big[s(n+1)-s(n-1)\big]}{2\cdot\Psi\big[s(n)\big]}\right) - \Omega_c$$

where $\Psi[s(n)]$ corresponds to $\Psi[s(n)^c]$
and

$$\frac{1}{2}\cdot\Psi\left[s(n+1)^C - s(n-1)^C\right]$$

corresponds to $\Psi[s'(n)^c]$, one has, by substituting the previously calculated values of $\Psi[s(n)^c]$ and $\Psi[s'(n)^c]$, the following expression of the signal in baseband, or rather the previously given definition (6) of said first "non-equalised" signal $\hat{q}(n)$, representative of the waveform of said modulating signal q(n):

$$\hat{q}(n) \cong \frac{1}{2\cdot\Omega_m}\cdot\arccos\left\{\mu(n)\cdot\left[\frac{1-\mu(n)}{\mu(n)} + \cos\big(2\cdot\Omega_c + 2\cdot\Omega_m\cdot q(n)\big)\right]\right\} - \frac{\Omega_c}{\Omega_m}$$

where $\mu(n)$ is the multipath coefficient and is defined by the following relation (9):

$$\mu(n) = \frac{\displaystyle\sum_{i=0}^{N} r_i^2\cdot\frac{\sin^4(\Omega_c+\Omega_m\cdot q(n)-\Omega_c\cdot\tau_i)}{\sin^4(\Omega_c+\Omega_m\cdot q(n))} + \sum_{\substack{i,k=0\\i\neq k}}^{N} 2\cdot r_i\cdot r_k\cdot\cos\big[\Omega_c\cdot n\cdot(\tau_i-\tau_k)+\Omega_c\cdot(\chi_i-\chi_k)\big]\cdot\frac{\sin^4\left(\Omega_c+\Omega_m\cdot q(n)-\frac{\Omega_c\cdot(\tau_i-\tau_k)}{2}\right)}{\sin^4(\Omega_c+\Omega_m\cdot q(n))}}{\displaystyle L\sum_{i=0}^{N} r_i^2\cdot\frac{\sin^2(\Omega_c+\Omega_m\cdot q(n)-\Omega_c\cdot\tau_i)}{\sin^2(\Omega_c+\Omega_m\cdot q(n))} + \sum_{\substack{i,k=0\\i\neq k}}^{N} 2\cdot r_i\cdot r_k\cdot\cos\big[\Omega_c\cdot n\cdot(\tau_i-\tau_k)+\Omega_c\cdot(\chi_i-\chi_k)\big]\cdot\frac{\sin^2\left(\Omega_c+\Omega_m\cdot q(n)-\frac{\Omega_c\cdot(\tau_i-\tau_k)}{2}\right)}{\sin^2(\Omega_c+\Omega_m\cdot q(n))}}$$

The previously defined expression (9) of the multipath coefficient $\mu(n)$ can be simplified if the signal $\hat{q}(n)$ is possibly decimated.

In such case, the crossed terms give a very small contribution to the signal energy, the average being close to zero.

In such case, the parameter $\mu(n)$ can therefore be rewritten as (10):

$$\mu(n) = \frac{\displaystyle\sum_{i=0}^{N} r_i^2\cdot\frac{\sin^4\big(\Omega_c+\Omega_m\cdot q(n)-\Omega_c\cdot\tau_i\big)}{\sin^4\big(\Omega_c+\Omega_m\cdot q(n)\big)}}{\displaystyle\sum_{i=0}^{N} r_i^2\cdot\frac{\sin^2\big(\Omega_c+\Omega_m\cdot q(n)-\Omega_c\cdot\tau_i\big)}{\sin^2\big(\Omega_c+\Omega_m\cdot q(n)\big)}}$$

Using the trigonometric formula in accordance to which

$$\frac{\sin(a-e)}{\sin a} = \cos e - \sin e\cdot\cot a$$

and using a sampling frequency f such to obtain a carrier angular frequency equal to

$$\Omega_c = (2 \cdot k + 1) \cdot \frac{\pi}{2} \quad \forall k \in \Im \geq 0$$

The parameter $\mu(n)$ can therefore be rewritten as (11):

$$\mu(n) = \frac{\sum_{i=0}^{N} r_i^2 \cdot \cos^4(\Omega_c \cdot \tau_i)}{\sum_{i=0}^{N} r_i^2 \cdot \cos^2(\Omega_c \cdot \tau_i)} \equiv \frac{1 + \frac{1}{r_0^2} \cdot \sum_{i=1}^{N} r_i^2 \cdot \cos^4(\Omega_c \cdot \tau_i)}{1 + \frac{1}{r_0^2} \cdot \sum_{i=1}^{N} r_i^2 \cdot \cos^2(\Omega_c \cdot \tau_i)} \quad \in \Re\{0 \cdots 1\}$$

In order to minimise the expression (11), assuming use in the worst operation case, it is necessary to place all attenuation values equal to one. In such case, $\mu(n)$ assumes a minimum value, as can be inferred by the subsequently reported Table 1, at an angular value equal to:

$$\Omega_c \cdot \tau_i = \arccos \sqrt{\frac{\sqrt{1 + \bar{N}} - 1}{\bar{N}}}$$

where $\bar{N}$ is the number of path reflections.

Table I

| $\bar{N}$ | $\mu(n)$ Minimum value | $\Omega_c \cdot \tau_i$ |
|---|---|---|
| 1 | 0.828428 | ~5π/18 |
| 2 | 0.732051 | ~22π/75 |
| 3 | 0.666667 | ~24π/79 |
| 4 | 0.618034 | ~5π/16 |
| 5 | 0.579796 | ~22π/69 |
| 6 | 0.548584 | ~12π/37 |
| 7 | 0.522408 | ~28π/85 |
| 8 | 0.500000 | π/3 |
| 9 | 0.480508 | ~29π/86 |
| 10 | 0.463359 | ~20π/59 |

To equalise the received signal s(n), s(n)$^c$, it is possible to estimate the parameter value $\mu(n)$ and subsequently extract the received signal s(n), s(n)$^c$ by using a special "arccos$_\mu$" function.
Such arccos$_\mu$ is a function which recursively depends on the value of $\mu(n)$, for example of the type $\alpha$= arccos$_\mu$ (1-$\mu$+$\mu$*cos$\alpha$).
Considering that the relation (6) can be rewritten in the manner illustrated here (12) :

$$2 \cdot \hat{\Omega}_c + 2 \cdot \hat{\Omega}_m \cdot \hat{q}(n) \cong \arccos\left[1 - \mu(n) + \mu(n) \cdot \cos\left(2 \cdot \Omega_c + 2 \cdot \Omega_m \cdot q(n)\right)\right]$$

and that the relation (12), assuming operation on the sample average, can be rewritten in accordance with the following relation (13):

$$2 \cdot \hat{\Omega}_c \cong \left\langle \arccos\left[1 - \mu(n) + \mu(n) \cdot \cos\left(2 \cdot \Omega_c + 2 \cdot \Omega_m \cdot q(n)\right)\right]\right\rangle_{average}$$

and that the relation (8) can be rewritten, assuming operation on the sample average, in accordance with the following relation (14):

$$2 \cdot \Omega_c \cong \left\langle \arccos\left[\cos\left(2 \cdot \Omega_c + 2 \cdot \Omega_m \cdot q(n)\right)\right]\right\rangle_{average}$$

by substituting such expressions (13) and (14) in the expression (11), the parameter expression $\mu(n)$ is obtained, or rather:

$$\mu(n) = \frac{1 - \cos\left(2 \cdot \hat{\Omega}_c\right)}{1 - \cos\left(2 \cdot \Omega_c\right)}$$

Therefore, the signal which must be subsequently processed in the back end of the receiver is that which is formulated here below:

$$\tilde{q}(n) \approx \frac{1}{2 \cdot \Omega_m} \cdot \arccos_\mu\left[1 - \mu(n) + \mu(n) \cdot \cos\left(2 \cdot \Omega_c + 2 \cdot \Omega_m \cdot q(n)\right)\right] - \frac{\Omega_c}{\Omega_m}$$

that is the previously given definition (7) of said second equalised signal $\tilde{q}(n)$, representative of the waveform of said modulating signal q(n).

In other words, the method according to the invention permits identifying the presence of multipath propagation, processing the parameter $\mu(n)$ and processing said second equalised signal $\tilde{q}(n)$ due to which the multipath propagation present in the received signal s(n), s(n)$^c$ is substantially eliminated.

The method for detecting the multipath propagation in the modulated digital signal s(n), s(n)$^c$ just illustrated can be achieved in either software or hardware mode.

With reference now to figure 1, an apparatus 1 for implementing such method for suppressing the presence of multipath propagation in the modulated digital signal s(n), s(n)$^c$ comprises:

- means 2 for providing a predetermined channel frequency value $\Omega_c$;
- derivation means 3 able to receive said digital signal s(n), s(n)$^c$ in input to generate a derivative signal s'(n),s'(n)$^c$ representative of the derivative of said digital signal s(n), s(n)$^c$,
- processing means 4 able to receive said digital signal s(n), s(n)$^c$ and said derivative signal s'(n),s'(n)$^c$ in input, so to apply a non-linear Teager-Kaiser function $\Psi$ to said digital signal s(n), s(n)$^c$ to generate a first signal $\Psi$[s(n),s(n)$^c$] representative of the energy of said digital signal s(n), s(n)$^c$, and to said derivative signal s'(n),s'(n)$^c$ to generate a second signal $\Psi$[s'(n),s'(n)$^c$] representative of the energy of the derivative s'(n),s'(n)$^c$ of said digital signal s(n), s(n)$^c$,
- second processing means 5 for processing said first signal $\Psi$[s(n),s(n)$^c$] and said second signal $\Psi$[s'(n),s'(n)$^c$] to generate a representative value of a processed channel angular frequency $\hat{\Omega}_c$ of said modulated digital signal s(n), s(n)$^c$,
- comparison means 6 able to receive in input said predetermined channel angular frequency value $\Omega_c$ and said representative value of a processed channel angular frequency $\hat{\Omega}_c$ to compare said predetermined channel angular frequency value $\Omega_c$ and said representative value of a processed channel angular frequency $\hat{\Omega}_c$ so to generate a parameter $\mu(n)$ able to detect the presence of multipath propagation in said modulated digital signal s(n), s(n)$^c$.

In particular, the comparison means 6 comprise:

- a first device d1 having in input said representative value of a processed channel angular frequency $\hat{\Omega}_c$ for calculating a first value v1, said first value v1 being calculable by means of the following relation:

$$v1 = 1\text{-}\cos(2*(\hat{\Omega_c}))$$

where

$v1$ is said first calculated value
$\hat{\Omega_c}$ is a value which corresponds to the angular frequency of processed carrier frequency;

- a second device d2 having in input said predetermined channel frequency value $\Omega_c$ for calculating a second value v2, said second value v2 being calculable by means of the following relation:

$$v2 = 1\text{-}\cos(2*(\Omega_c))$$

where

$v2$ is said second calculated value
$\Omega_c$ corresponds to the angular frequency of carrier frequency ($f_c$).

It should be indicated that said comparison means 6 are capable of calculating the ratio between said first value v1 and said second value v2 to generate the parameter $\mu(n)$, thus to detect the presence of multipath propagation in said modulated digital signal s(n), s(n)$^c$.

In particular, the comparison means 6 execute the ratio between said first value v1 and said second value v2, that is (4):

$$\mu(n) = \frac{v1}{v2}$$

Once the comparison means 6 have generated the parameter $\mu(n)$, this can be used by the processing means 5 for processing said first signal $\Psi[s(n),s(n)^c]$ and said second signal $\Psi[s'(n),s'(n)^c]$ for generating the equalized signal $\tilde{q}(n)$.

As described above, the equalised signal $\tilde{q}(n)$, representative of the waveform of said modulating signal (q(n)), is calculable by applying the following formula (7):

$$\tilde{q}(n) \approx \frac{1}{2 \cdot \Omega_m} \cdot \arccos_\mu \left[ 1 - \mu(n) + \mu(n) \cdot \cos\left(2 \cdot \Omega_c + 2 \cdot \Omega_m \cdot q(n)\right) \right] - \frac{\Omega_c}{\Omega_m}$$

where

$\Omega_c$ corresponds with the angular frequency of carrier frequency $f_c$;
$\mu(n)$ is the ratio between said representative value of a processed channel frequency $\hat{\Omega_c}$ and said predetermined channel frequency value $\Omega_c$;
$\arccos_\mu$ is a function which depends on the value of $\mu(n)$ ;
q(n)*$\Omega_m$ is said ideal signal representative of the waveform of said modulating signal q(n).

As previously shown for obtaining the equalised signal $\tilde{q}(n)$, it is necessary that the processing means 5 process said first signal $\Psi[s(n),s(n)^c]$ and said second signal $\Psi[s'(n),s'(n)^c]$ by applying the following formula:

$$\tilde{q}(n) \cdot \Omega_m \cong \frac{1}{2} \cdot \arccos_\mu \left( 1 - \frac{\Psi[s(n+1) - s(n-1)]}{2 \cdot \Psi[s(n)]} \right) - \Omega_c$$

where

$\Psi[s(n)]$ corresponds with said first signal,

$\Psi[s(n+1)-s(n-1)]$ corresponds with said second signal,

$\Omega_c$ corresponds with the angular frequency of carrier frequency $f_c$,

$\arccos_\mu$ is a function which depends on the value of $\mu(n)$.

In a preferred embodiment, the derivation means 3, the processing means 4, the second processing means and the comparison means 6 can be implemented in a single device, such as for example a DSP (Digital Signal Processor).

In particular, the receiver obtainable is capable of receiving a modulated analog signal s(t) in input and converting it to a modulated digital signal s(n),s(n)$^c$ by means of appropriate analog-digital converter means (not shown in the figures).

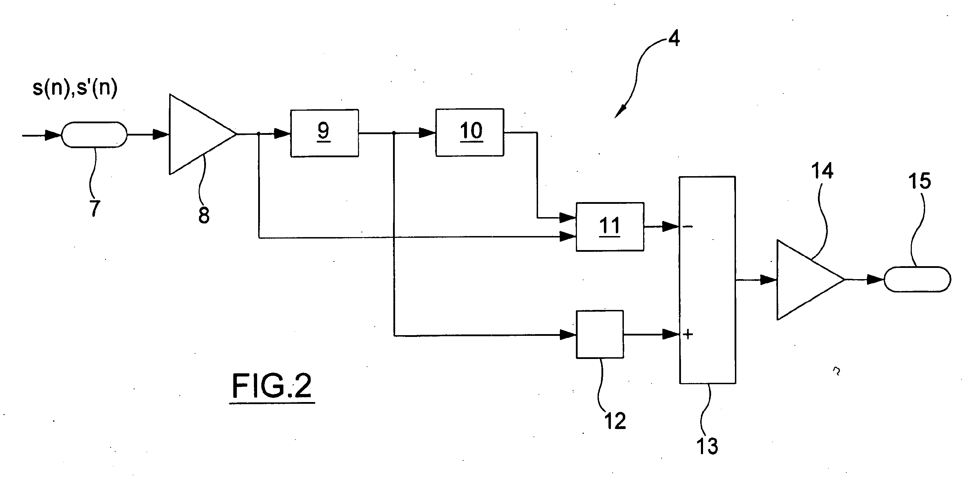

In figure 2 a possible embodiment is illustrated of the processing means 4 for implementing the non-linear Teager-Kaiser function.

Such processing means 4 comprise an input 7 able to receive the signal s(n) or the derivative signal s'(n), preferably but not necessarily a pre-amplification stage 8 for amplifying the signal s(n), a first delay block 9 and a second delay block 10.

The first delay block 9 is connected to the input 7 and is able to delay the input signal s(n) by one sample, while the second delay block 10 is input connected to the output of the first delay block 9 and is able to delay the signal output from the first delay block 9 by one sample.

The means 4 comprise a multiplier 11 connected to the input 7 and to the output of the second delay block 10 for multiplying the signal s(n) at the input 7 and the signal at the output of the second delay block 10 and a block 12 which squares the signal output from the first delay block 9.

Moreover, an adder block 13 is present having a positive input connected to the output of the block 12 and a negative input connected to the output of the multiplier block 11.

Preferably but not necessarily, the means 4 comprise a post-amplification stage 14 for amplifying the signal output from the adder block 13 and an output 15 from which the first signal $\Psi[s(n),s(n)^c]$ and said second signal $\Psi[s'(n), s'(n)^c]$ are drawn.

In the case in which, the sample s(n-1) of the signal s(n) is present at the input 7 of the circuit, the signal at the output 15 is represented by the expression reported here below:

$$\left[s(n)\right]^2 - s(n+1) \cdot s(n-1)$$

that is the Teager Kaiser function $\Psi[s(n)]$ of the modulated digital signal s(n).

The apparatus 1 for suppressing the presence of multipath propagation in the modulated digital signal s(n),s (n)$^c$ can be implemented in a receiver (not illustrated in the figures), which can also be inserted in a portable multimedia device (not illustrated in the figures).

For example, the portable multimedia device comprises a central unit and a plurality of circuits, said central unit being able to control the operation of said plurality of circuits, and said plurality of circuits comprising at least one interface chosen from among the group comprising a video interface, a keyboard interface, a communication interface, a pen input interface, an audio interface or a combination of these.

For example, the portable multimedia device described above can be a cellular telephone equipped with a digital media player, of MP3 player type and/or MP4 player type and/or WMV player Digital type.

Of course, a man skilled in the art, in order to satisfy continent and specific needs, may make numerous modifications and variants to the method, apparatus and receiver according to the invention described above, all moreover contained in the protective scope of the invention as defined by the following claims.

**Claims**

1.  Method for detecting the presence of multipath propagation in a modulated digital signal (s(n),s(n)$^c$), said method comprising the steps:

    - providing at least one predetermined first value, $\Omega_c$, of channel angular frequency, representative of said modulated digital signal free of multipath propagation,

    **characterised by** comprising the further steps of:

- processing said modulated digital signal to obtain a derivative signal (s'(n),s'(n)$^c$) representative of the derivative of said modulated digital signal,
- applying a non-linear Teager-Kaiser function ($\psi$) to said modulated digital signal to generate a first signal $\psi$ (s(n),s(n)$^c$) representative of the energy of said modulated digital signal,
- applying said non-linear Teager-Kaiser function to said derivative signal to generate a second signal $\psi$(s'(n), s'(n)$^c$) representative of the energy of said derivative signal,
- processing said first signal and said second signal to generate at least one second value, $\hat{\Omega}_c$ of calculated channel angular frequency, representative of said modulated digital signal with multipath propagation,
- calculating the ratio between said at least one second value and said at least one first value, said ratio identifying a parameter, $\mu$(n), able to detect the presence of multipath propagation in said modulated digital signal if said calculated ratio is less than 1.

2. Method for detecting the presence of multipath propagation in accordance with claim 1, wherein said modulated digital signal is a modulated signal composed of a carrier signal oscillating at a carrier frequency ($f_c$) and a modulating signal (a(n),q(n)).

3. Method for detecting the presence of multipath propagation in accordance with any one of the claims from 1 or 2, wherein said parameter is calculated according to the following formula:

$$\mu(n) = \frac{1 - \cos\left(2 \cdot \hat{\Omega}_c\right)}{1 - \cos\left(2 \cdot \Omega_c\right)}$$

4. Method for detecting the presence of multipath propagation in accordance with the claims from 1 to 3, wherein said step of generating said at least one second value ($\hat{\Omega}c$) is calculated by applying the following formula:

$$\hat{\Omega}_c = \frac{1}{N} \cdot \sum_{n=1}^{N} \frac{1}{2} \cdot \arccos\left(1 - \frac{\Psi_F\left[s(n+1) - s(n-1)\right]}{2 \cdot \Psi_F\left[s(n)\right]}\right)$$

where

N is the number of samples to be analysed,
$\Psi_F[s(n)]$ is said first signal representative of the energy of said modulated digital signal,
$\Psi_F[s(n+1)-s(n-1)]$ is said second signal representative of the energy of said derivative, signal.

5. Method for detecting the presence of multipath propagation in accordance with claim 4, wherein the number of samples to be analysed (N) must satisfy the relation:

$$N \leq \frac{2 f_m}{\Omega_q f_{prec}}$$

where:

- $f_m$ is known and it is equal to the frequency deviation of the modulating signal in an FM transmission,
- $\Omega_q$ is known and is equal to the angular bandwidth of the FM modulating signal in an FM transmission and
- $f_{prec}$ is set by the user.

6. Method for detecting and suppressing the presence of multipath propagation in accordance with any one of the claims from 1 to 5, wherein said step of processing said first signal and said second signal is able so to generate an equalized signal ($\tilde{q}(n)$) that suppress the presence of multipath propagation in said modulated digital signal by applying the following formula:

$$\tilde{q}(n) \approx \frac{1}{2 \cdot \Omega_m} \cdot \arccos_\mu \left[ 1 - \mu(n) + \mu(n) \cdot \cos(2 \cdot \Omega_c + 2 \cdot \Omega_m \cdot q(n)) \right] - \frac{\Omega_c}{\Omega_m}$$

where
$\arccos_\mu$ is the modified arc cosine, which depends on the value of $\mu(n)$ and which solves the equation $\alpha \equiv \arccos_\mu (1-\mu+\cos\alpha)$;
$q(n)^*\Omega_m$ is an ideal signal representative of the waveform of said modulating signal ($q(n)$);
or said formula for calculating the equalised signal suppressing the presence of multipath propagation in said modulated digital signal is calculated with the *arccos*$_\mu$ function as:

$$\tilde{q}(n) \cdot \Omega_m \cong \frac{1}{2} \cdot \arccos_\mu \left( 1 - \frac{\Psi\left[ s(n+1) - s(n-1) \right]}{2 \cdot \Psi\left[ s(n) \right]} \right) - \Omega_c$$

    - $\Psi[s(n)]$ is said first signal representative of the energy of said modulated digital signal and

$$\cdot \Psi\left[ s(n+1) - s(n-1) \right]$$

    is said second signal representative of the energy of said derivative signal
    $\Omega_m$ is the known angular frequency deviation of said modulating signal.

**7.** Apparatus for detecting the presence of multipath propagation in a modulated digital signal ($s(n),s(n)^c$), said apparatus comprising:

    - means (2) for providing at least one predetermined first value, $\Omega_c$ of channel angular frequency, representative of said modulated digital signal free of multipath propagation,
    - derivation means (3) able to receive said modulated digital signal as an input, and able to generate a derivative signal ($s'(n),s'(n)^c$) representative of the derivative of said modulated digital signal
    - first processing means (4) able to receive said modulated digital signal as an input, and able to apply a non-linear Teager-Kaiser function ($\psi$) to said modulated digital signal so to generate a first signal $\psi_F(s(n))$ representative of the energy of said digital signal, said first processing means being further able to receive said derivative signal as an input, and able to apply said non-linear Teager-Kaiser function to said derivative signal so to generate a second signal $W_F(s'(n))$ representative of the energy of said derivative signal
    - second processing (5) means for processing said first signal and said second signal so to generate a second value, $\hat{\Omega}_c$ representative of a calculated channel angular frequency of said modulated digital signal with multipath propagation **characterised by** further comprising comparison means (6) able to receive said first value and said second value as inputs, and able to compare said first value and said second value so as to calculate the ratio between said at least one second value and said at least one first value , said ratio identifying a parameter, $\mu(n)$, able to detect the presence of multipath propagation in said modulated digital signal, said comparison means (6) detecting the multipath propagation when said parameter is less than 1.

**8.** Apparatus for detecting the presence of multipath propagation in accordance with claim 7, wherein said comparison means comprise:

    - a first calculation device (d1) having said second value ($\hat{\Omega}_c$) as an input, to calculate a first calculated value v1, said first calculated value being calculable by means of the following relation:

$$v1 = 1 - \cos(2 * (\hat{\dot{\Omega}_c}))$$

- a second calculation device (d2) having as an input said second value ($\Omega_c$), to calculate a second calculated value v2, said second value being calculable by means of the following relation:

$$v2 = 1 - \cos(2 * (\Omega_c))$$

said comparison means being able to calculate the ratio between said first calculated value and said second calculated value to generate said parameter able to detect the presence of multipath propagation in said modulated digital signal, by means of the following relation:

$$\mu(n) = \frac{v(1)}{v(2)}$$

9. Apparatus for detecting the presence of multipath propagation in accordance with claims 7 and 8, wherein said modulated digital signal is an FM signal, said second processing means (5) being able to process said first signal and said second signal so to generate an ideal signal q(n)$\Omega_m$ representative of the waveform of said modulating signal (q(n)) by applying the following formula:

$$q(n) \cdot \Omega_m \cong \frac{1}{2} \cdot \arccos\left(1 - \frac{\Psi\left[(n+1) - (n-1)\right]}{2 \cdot \Psi\left[(n)\right]}\right) - \Omega_c$$

where
$\Psi$[s(n)] is said first signal,
$\Psi$[s(n+1)-s(n-1)] is said second signal.

10. Apparatus for detecting the presence of multipath propagation in accordance with claims 7-9, where said derivation means (3), said first processing means (4), said second processing means (5) and said comparison means (6) are implemented in a single DSP device.

11. Apparatus for detecting and suppressing the presence of multipath propagation in accordance with the claims from 7 to 10, wherein said modulated digital signal is an FM signal, said processing means being able to process said first signal and said second signal so to generate an -equalised signal $\tilde{q}(n)$ representative of the waveform of said modulating signal (q(n)) by applying the following formula:

$$\tilde{q}(n) \cdot \Omega_m \cong \frac{1}{2} \cdot \arccos_\mu\left(1 - \frac{\Psi\left[s(n+1) - s(n-1)\right]}{2 \cdot \Psi\left[s(n)\right]}\right) - \Omega_c$$

where

- arccos$_\mu$ is the modified arc cosine, which depends on the value of $\mu$(n) and which solves the equation$\alpha$ $\equiv$arccos$_\mu$(1-$\mu$+$\mu$.cos$\alpha$);

$\Omega_m$ is the known angular frequency deviation of said modulating signal.

**12.** Receiver for receiving an analog radio frequency signal (s(t)), comprising analogdigital converter means able to receive said analog signal as an input, to convert said analog signal into a modulated digital signal, said receiver **characterised in that** it comprises an apparatus for detecting and suppressing the presence of multipath propagation in said modulated digital signal, said modulated digital signal being received with a predetermined channel angular frequency ($\Omega_c$), said apparatus for detecting the presence of multipath propagation being in accordance with any one of the claims 7-11.

**13.** Portable multimedia device comprising:

- a central unit and a plurality of circuits, said central unit being able to control the operation of said plurality of circuits, and said plurality of circuits comprising at least one interface chosen from among the group comprising a video interface, a keyboard interface, a communication interface, a pen input interface, an audio interface or a combination of these,
- at least one antenna able to receive an analog radio frequency signal,
- a receiver having at least one signal coupled to said at least one antenna for receiving said analog radio frequency signal, said receiver being in accordance with claim 12.

**14.** Computer product directly loadable in the memory of a numerical processing device, comprising portions of program code which can achieve the method in accordance with any one of the claims 1-6 when running on said processor device.

**Patentansprüche**

**1.** Verfahren zum Detektieren von Mehrwegeausbreitung in einem modulierten digitalen Signal (s(n), s(n)$^c$), wobei das Verfahren die Schritte umfaßt:

- Bereitstellen mindestens eines vorgegebenen ersten Wertes $\Omega_c$ einer Kanalkreisfrequenz, der das modulierte digitale Signal ohne Mehrwegeausbreitung darstellt,

**dadurch gekennzeichnet, daß** es ferner die Schritte umfaßt:

- Verarbeiten des modulierten digitalen Signals, um ein Ableitungssignal (s'(n), s'(n)$^c$) zu erhalten, das die Ableitung des modulierten digitalen Signals darstellt,
- Anwenden einer nicht-linearen Teager-Kaiser-Funktion ($\psi$) auf das modulierte digitale Signal, um ein erstes Signal $\psi$ (s(n), s(n)$^c$) zu erzeugen, das die Energie des modulierten digitalen Signals darstellt,
- Anwenden der nicht-linearen Teager-Kaiser-Funktion auf das Ableitungssignal, um ein zweites Signal $\psi$ (s'(n), s'(n)$^c$) zu generieren, das die Energie des Ableitungssignal darstellt,
- Verarbeiten des ersten Signals und des zweiten Signals, um mindestens einen zweiten Wert $\Omega_c$ der berechneten Kanalkreisfrequenz zu generieren, der das modulierte digitale Signal mit Mehrwegeausbreitung darstellt,
- Berechnen des Verhältnisses zwischen dem mindestens einen zweiten Wert und dem mindestens einen ersten Wert, wobei das Verhältnis einen Parameter $\mu(n)$ identifiziert, der zum Detektieren von Mehrwegeausbreitung in dem modulierten digitalen Signal geeignet ist, wenn das berechnete Verhältnis weniger als 1 beträgt.

**2.** Verfahren zum Detektieren von Mehrwegeausbreitung nach Anspruch 1, wobei das modulierte digitale Signal ein moduliertes Signal ist, das aus einem bei einer Trägerfrequenz ($f_c$) oszillierenden Trägersignal und einem modulierenden Signal (a(n), q(n)) zusammengesetzt ist.

**3.** Verfahren zum Detektieren von Mehrwegeausbreitung nach einem der Ansprüche 1 oder 2, wobei der Parameter nach folgender Formel berechnet wird:

$$\mu(n) = \frac{1 - \cos\left(2 \cdot \hat{\Omega}_c\right)}{1 - \cos\left(2 \cdot \Omega_c\right)}$$

**4.** Verfahren zum Detektieren von Mehrwegeausbreitung nach Ansprüchen 1 bis 3, wobei der Schritt des Generierens des wenigstens einen zweiten Wertes $\hat{\Omega}_c$ durch Anwendung der folgenden Formel berechnet wird:

$$\hat{\Omega}_c = \frac{1}{N} \cdot \sum_{n=1}^{N} \frac{1}{2} \cdot \arccos\left( 1 - \frac{\Psi_F\left[s(n+1) - s(n-1)\right]}{2 \cdot \Psi_F\left[s(n)\right]} \right)$$

wobei
N die Anzahl der zu analysierenden Proben ist,
$\psi_F[s(n)]$ das erste Signal ist, das die Energie des modulierten digitalen Signals darstellt,
$\psi_F[s(n+1) - s(n-1)]$ das zweite Signal ist, das die Energie des Ableitungssignals darstellt.

**5.** Verfahren zum Detektieren von Mehrwegeausbreitung nach Anspruch 4, wobei die Anzahl der zu analysierenden Proben (N) die Relation

$$N \leq \frac{2 f_m}{\Omega_\psi f_{prec}}$$

erfüllen muß, wobei

- $f_m$ bekannt ist und es ist gleich der Frequenzabweichung des modulierenden Signals in einer FM-Übertragung,
- $\Omega_q$ bekannt ist und es ist gleich der Kreisbandbreite des FMmodulierenden Signals in einer FM-Übertragung, und
- $f_{prec}$ durch den Benutzer festgelegt wird.

**6.** Verfahren zum Detektieren und zum Unterdrücken von Mehrwegeausbreitung nach einem der Ansprüche 1 bis 5, wobei der Schritt des Verarbeitens des ersten Signals und des zweiten Signals geeignet ist, so ein entzerrtes Signal ($\tilde{q}$(n)) zu generieren, das die Mehrwegeausbreitung in dem modulierten digitalen Signal unter Anwendung folgender Formel unterdrückt:

$$\tilde{q}(n) = \frac{1}{2 \cdot \Omega_m} \cdot \arccos_\mu\left[1 - \mu(n) + \mu(n) \cdot \cos\left(2 \cdot \Omega_c + 2 \cdot \Omega_m \cdot q(n)\right)\right] - \frac{\Omega_c}{\Omega_m}$$

wobei
$\arccos_\mu$ der modifizierte Arkuskosinus ist, der von dem Wert von $\mu$(n) abhängt, und der die Gleichung $\alpha \equiv \arccos\mu$ $(1 - \mu + \cos\alpha)$ löst;
$q(n)^*\Omega_m$ ein ideales Signal ist, das die Wellenform des modulierenden Signals ($q$(n)) darstellt;
oder wobei die Formel zur Berechnung des entzerrten Signals, das die Mehrwegeausbreitung in dem modulierten digitalen Signal unterdrückt, mit der *arccos*$_\mu$-Funktion wie folgt berechnet wird:

$$\tilde{q}(n) \cdot \Omega_m \cong \frac{1}{2} \cdot \arccos_\mu\left( 1 - \frac{\Psi\left[s(n+1) - s(n-1)\right]}{2 \cdot \Psi\left[s(n)\right]} \right) - \Omega_c$$

- $\psi$ [s (n)] ist das erste Signal, das die Energie des modulierten digitalen Signals darstellt, und

$$\psi\,[\,s(n+1) - s(n\text{-}1)\,]$$

ist das zweite Signal, das die Energie des Ableitungssignals darstellt,

$\Omega_m$ ist die bekannte Kreisfrequenzabweichung des modulierenden Signals.

**7.** Vorrichtung zum Detektieren von Mehrwegeausbreitung in einem modulierten digitalen Signal (s(n), s(n)$^c$), wobei die Vorrichtung umfaßt:

- Mittel (2) zum Bereitstellen mindestens eines vorgegebenen ersten Wertes $\Omega_c$ einer Kanalkreisfrequenz, der das modulierte digitale Signal ohne Mehrwegeausbreitung darstellt,
- Ableitungsmittel (3), die zum Empfang des modulierten digitalen Signals als Eingang geeignet sind, und die zum Generieren eines Ableitungssignals (s'(n), s'(n)$^c$) geeignet sind, das die Ableitung des modulierten digitalen Signals darstellt,
- erste Verarbeitungsmittel (4), die zum Empfang des modulierten digitalen Signals als Eingang geeignet sind, und die zum Anwenden einer nicht-linearen Teager-Kaiser-Funktion ($\psi$) auf das modulierte digitale Signal geeignet sind, um so ein erstes Signal $\psi_F(s(n))$ zu generieren, das die Energie des digitalen Signals darstellt, wobei die ersten Verarbeitungsmittel weiter zum Empfangen des Ableitungssignals als Eingang geeignet sind, und zum Anwenden der nicht-linearen Teager-Kaiser-Funktion auf das Ableitungssignal geeignet sind, um so ein zweites Signal $\psi_F(s'(n))$ zu generieren, das die Energie des Ableitungssignals darstellt,
- zweite Verarbeitungsmittel (5) zum Verarbeiten des ersten Signals und des zweiten Signals, um so einen zweiten Wert $\hat{\Omega}_c$ zu generieren, der eine berechnete Kanalkreisfrequenz des modulierten digitalen Signals mit Mehrwegeausbreitung darstellt,

ferner durch Vergleichsmittel (6) **gekennzeichnet**, die zum Empfangen des ersten Wertes und des zweiten Wertes als Eingänge geeignet sind und die zum Vergleichen des ersten Wertes und des zweiten Wertes geeignet sind, um so das Verhältnis zwischen dem wenigstens einen zweiten Wert und dem wenigstens einen ersten Wert zu berechnen, wobei das Verhältnis einen Parameters $\mu(n)$ identifiziert, der zum Detektieren von Mehrwegeausbreitung in dem modulierten digitalen Signal geeignet ist, wobei die Vergleichsmittel (6) die Mehrwegeausbreitung detektieren, wenn der Parameter kleiner als 1 ist.

**8.** Vorrichtung zum Detektieren von Mehrwegausbreitung nach Anspruch 7, wobei die Vergleichsmittel umfassen:

- eine erste Berechnungsvorrichtung (d1), die den zweiten Wert ($\hat{\Omega}_c$) als Eingang hat, um einen ersten berechneten Wert v1 zu berechnen, wobei der erste berechnete Wert mittels der folgenden Relation berechenbar ist:

$$v1 = 1 - \cos(2^*(\hat{\Omega}_c))$$

- eine zweite Berechnungsvorrichtung (d2), die den zweiten Wert ($\Omega_c$) als Eingang hat, um einen zweiten berechneten Wert v2 zu berechnen, wobei der zweite berechnete Wert mittels der folgenden Relation berechenbar ist:

$$v2 = 1 - \cos(2^*(\Omega_c))$$

wobei die Vergleichsmittel mittels nachfolgender Relation zur Berechnung des Verhältnisses zwischen dem ersten berechneten Wert und dem zweiten berechneten Wert geeignet sind, um den Parameter zu generieren, der zum Detektieren von Mehrwegeausbreitung in dem modulierten digitalen Signal geeignet ist:

$$\mu(n) = \frac{v(1)}{v(2)}$$

**9.** Vorrichtung zum Detektieren von Mehrwegausbreitung nach den Ansprüchen 7 und 8, wobei das modulierte digitale Signal ein FM-Signal ist, wobei die zweiten Verarbeitungsmittel (5) in der Lage sind, das erste Signal und das zweite Signal so zu verarbeiten, daß ein ideales Signal q(n)$\Omega_m$ generiert wird, das die Wellenform des modulierenden Signals (q(n)) darstellt, indem folgende Formel angewendet wird:

$$q(n) \cdot \Omega_m \cong \frac{1}{2} \cdot \arccos\left(1 - \frac{\Psi\left[s(n+1) - s(n-1)\right]}{2 \cdot \Psi\left[s(n)\right]}\right) - \Omega_c$$

wobei
$\psi[s(n)]$ das erste Signal ist,
$\psi[s(n+1) - s(n-1)]$ das zweite Signal ist.

**10.** Vorrichtung zum Detektieren von Mehrwegeausbreitung nach den Ansprüchen 7 bis 9, wobei die Ableitungsmittel (3), die ersten Verarbeitungsmittel (4), die zweiten Verarbeitungsmittel (5) und die Vergleichsmittel (6) in einem einzigen DSP-Gerät implementiert sind.

**11.** Vorrichtung zum Detektieren und Unterdrücken von Mehrwegeausbreitung nach den Ansprüchen 7 bis 10, wobei das modulierte digitale Signal ein FM-Signal ist, wobei die Verarbeitungsmittel geeignet sind, das erste Signal und das zweite Signal zu verarbeiten, um ein entzerrtes Signal $\tilde{q}$ (n) zu generieren, das die Wellenform des modulierenden Signals (q(n)) darstellt, indem folgende Formel angewendet wird:

$$\tilde{q}(n) \cdot \Omega_m \cong \frac{1}{2} \cdot \arccos_\mu\left(1 - \frac{\Psi\left[s(n+1) - s(n-1)\right]}{2 \cdot \Psi\left[s(n)\right]}\right) - \Omega_c$$

wobei

- $\arccos_\mu$ der modifizierte Arkuskosinus ist, der von dem Wert von $\mu(n)$ abhängt, und die Gleichung $\alpha \equiv \arccos_\mu$ $(1 - \mu + \mu.\cos\alpha)$ löst,
- $\Omega_m$ die bekannte Kreisfrequenzabweichung des modulierenden Signals ist.

**12.** Empfänger zum Empfangen eines analogen Radiofrequenzsignals (s(t)), umfassend Analog/Digital-Wandlungsmittel, die zum Empfangen des analogen Signals als Eingang und zur Wandlung des analogen Signals in ein moduliertes digitales Signal geeignet sind, wobei der Empfänger **dadurch gekennzeichnet ist, daß** er eine Vorrichtung zum Detektieren und Unterdrücken von Mehrwegeausbreitung in dem modulierten digitalen Signal umfaßt, wobei das modulierte digitale Signal mit einer vorgegebenen Kanalkreisfrequenz ($\Omega_c$) empfangen wird, wobei die Vorrichtung zum Detektieren von Mehrwegeausbreitung einem der Ansprüche 7 bis 11 entspricht.

**13.** Tragbares Multimedia-Gerät umfassend:

- eine Zentraleinheit und eine Vielzahl von Schaltungen, wobei die Zentraleinheit zur Steuerung des Betriebs der Vielzahl von Schaltungen geeignet ist und die Vielzahl von Schaltungen mindestens eine Schnittstelle umfaßt, ausgewählt aus der Gruppe umfassend eine Video-Schnittstelle, eine Tastatur-Schnittstelle, eine Kommunikations-Schnittstelle, ein Stift-Eingabe-Schnittstelle, eine Audio-Schnittstelle oder eine Kombination daraus,
- mindestens eine Antenne, die zum Empfangen eines analogen Radiofrequenzsignals geeignet ist,
- ein Empfänger, bei dem mindestens ein Signal mit der zumindest einen Antenne zum Empfangen des analogen Radiofrequenzsignals gekoppelt ist, wobei der Empfänger Anspruch 12 entspricht.

**14.** Computerprodukt, das direkt in den Speicher einer numerischen Verarbeitungseinrichtung ladbar ist, umfassend Programmcodeteile, die geeignet sind, das Verfahren nach einem der Ansprüche 1 bis 6 zu verwirklichen, wenn sie auf der Verarbeitungseinrichtung laufen.

## Revendications

**1.** Procédé de détection de la présence de propagation à trajets multiples dans un signal numérique modulé (s(n), s(n)$^c$), ledit procédé comprenant les étapes :

- fournir au moins une première valeur prédéterminée $\Omega_c$ d'une fréquence angulaire de canal, qui est représentative du signal numérique modulé exempt de propagation à trajets multiples,

**caractérisé par le fait qu'**il comprend en plus les étapes consistant à :

- traiter le signal numérique modulé afin d'obtenir un signal dérivé (s'(n), s'(n)$^c$) représentatif de la dérivée dudit signal numérique modulé,
- appliquer une fonction non linéaire de Teager-Kaiser ($\psi$) au signal numérique modulé afin de générer un premier signal $\psi$ (s(n), s(n)$^c$) qui est représentatif de l'énergie du signal numérique modulé,
- appliquer ladite fonction non linéaire de Teager-Kaiser au signal dérivé afin de générer un deuxième signal $\psi$ (s'(n), s'(n)$^c$) qui est représentatif de l'énergie du signal dérivé,
- traiter ledit premier signal et ledit deuxième signal afin de générer au moins une deuxième valeur $\hat{\Omega}_c$ de la fréquence angulaire de canal calculée, qui est représentative du signal numérique modulé avec propagation à trajets multiples,
- calculer le rapport entre ladite au moins une deuxième valeur et ladite au moins une première valeur, ledit rapport identifiant un paramètre $\mu(n)$ apte à détecter la présence de propagation à trajets multiples dans le signal numérique modulé si le rapport calculé est inférieur à 1.

2. Procédé de détection de la présence de propagation à trajets multiples selon la revendication 1, dans lequel ledit signal numérique modulé est un signal modulé composé d'un signal porteur oscillant à une fréquence porteuse ($f_c$) et d'un signal modulant (a(n), q(n)).

3. Procédé de détection de la présence de propagation à trajets multiples selon l'une quelconque des revendications 1 ou 2, dans lequel ledit paramètre est calculé selon la formule suivante:

$$\mu(n) = \frac{1 - \cos(2 \cdot \hat{\Omega}_c)}{1 - \cos(2 \cdot \Omega_c)}$$

4. Procédé de détection de la présence de propagation à trajets multiples selon les revendications 1 à 3, dans lequel l'étape de génération de ladite au moins une deuxième valeur $\hat{\Omega}_c$ est calculée en appliquant la formule suivante :

$$\hat{\Omega}_c = \frac{1}{N} \cdot \sum_{n=1}^{N} \frac{1}{2} \cdot \arccos\left(1 - \frac{\Psi_F\left[s(n+1) - s(n-1)\right]}{2 \cdot \Psi_F\left[s(n)\right]}\right)$$

où
N est le nombre d'échantillons à analyser,
$\psi_F[s(n)]$ est ledit premier signal qui est représentatif de l'énergie dudit signal numérique modulé,
$\psi_F[s(n+1) - s(n-1)]$ est ledit deuxième signal qui est représentatif de l'énergie du signal dérivé.

5. Procédé de détection de la présence de propagation à trajets multiples selon la revendication 4, dans lequel le nombre d'échantillons à analyser (N) doit vérifier la relation :

$$N \leq \frac{2 f_m}{\Omega_q f_{prec}}$$

où

- $f_m$ est connu et il est égal à la déviation de fréquence du signal modulant dans une transmission FM,
- Qq est connu et est égal à la largeur de bande angulaire du signal modulant FM dans une transmission FM, et
- $f_{prec}$ est déterminé par l'utilisateur.

6. Procédé de détection et de suppression de la présence de propagation à trajets multiples selon l'une quelconque des revendications 1 à 5, dans lequel l'étape de traitement du premier signal et du deuxième signal est apte à générer un signal égalisé ($\tilde{q}$ (n)) qui supprime la présence de propagation à trajets multiples dans ledit signal numérique modulé en appliquant la formule suivante :

$$\tilde{q}(n) \approx \frac{1}{2 \cdot \Omega_m} \cdot \arccos_\mu \left[ 1 - \mu(n) + \mu(n) \cdot \cos\left(2 \cdot \Omega_c + 2 \cdot \Omega_m \cdot q(n)\right) \right] - \frac{\Omega_c}{\Omega_m}$$

où

$\arccos_\mu$ est l'arc cosinus modifié qui dépend de la valeur de $\mu(n)$ et qui résout l'équation $\alpha \equiv \arccos_\mu (1 - \mu + \cos\alpha)$;

$q(n)^* \Omega_m$ est un signal idéal qui est représentatif de la forme d'onde dudit signal modulant ($q(n)$);

ou la formule destiné à calculer le signal égalisé supprimant la présence de propagation à trajets multiples dans le signal numérique modulé est calculée à l'aide de la fonction *arccos*$_\mu$ telle que:

$$\tilde{q}(n) \cdot \Omega_m \cong \frac{1}{2} \cdot \arccos_\mu \left( 1 - \frac{\Psi\left[s(n+1) - s(n-1)\right]}{2 \cdot \Psi\left[s(n)\right]} \right) - \Omega_c$$

- $\psi[s(n)]$ est le premier signal qui est représentatif de l'énergie du signal numérique modulé, et

$$\psi\,[\,\mathrm{s}(n+1) - \mathrm{s}(n\text{-}1)\,]$$

est le deuxième signal qui est représentatif de l'énergie du signal dérivé,

$\Omega_m$ est la déviation connue de fréquence angulaire dudit signal modulant.

7. Dispositif de détection de la présence de propagation à trajets multiples dans un signal numérique modulé (s(n), s(n)c), ledit dispositif comprenant:

- des moyens (2) destinés à fournir au moins une première valeur prédéterminée $\Omega_c$ d'une fréquence angulaire de canal, qui est représentative du signal numérique modulé exempt de propagation à trajets multiples,
- des moyens de dérivation (3) aptes à recevoir ledit signal numérique modulé en tant qu'une entrée et aptes à générer un signal dérivé (s'(n), s'(n)c) qui est représentatif de la dérivée dudit signal numérique modulé,
- des premiers moyens de traitement (4) aptes à recevoir ledit signal numérique modulé en tant qu'une entrée et aptes à appliquer une fonction non linéaire de Teager-Kaiser ($\psi$) au signal numérique modulé de manière à générer un premier signal $\psi_F(s(n))$ qui est représentatif de l'énergie du signal numérique, lesdits premiers moyens de traitement étant en plus aptes à recevoir ledit signal dérivé en tant qu'une entrée et étant aptes à appliquer ladite fonction non linéaire de Teager-Kaiser au signal dérivé de manière à générer un deuxième signal $\psi_F(s'(n))$ qui est représentatif de l'énergie du signal dérivé,
- des seconds moyens de traitement (5) destinés à traiter ledit premier signal et ledit deuxième signal de manière à générer une deuxième valeur $\hat{\Omega}_c$ qui est représentative d'une fréquence angulaire de canal calculée du signal numérique modulé avec propagation à trajets multiples,

**caractérisé en ce qu'**il comprend en outre des moyens de comparaison (6) aptes à recevoir ladite première valeur et ladite deuxième valeur en tant qu'entrées et

aptes à comparer ladite première valeur à ladite deuxième valeur de manière à calculer le rapport entre ladite au moins une deuxième valeur et ladite au moins une première valeur, ledit rapport identifiant un paramètre $\mu$(n) apte à détecter la présence de propagation à trajets multiples dans le signal numérique modulé, lesdits moyens de comparaison (6) détectant la propagation à trajets multiples lorsque ledit paramètre est inférieur à 1.

**8.** Dispositif de détection de la présence de propagation à trajets multiples selon la revendication 7, dans lequel lesdits moyens de comparaison comprennent:

- un premier dispositif de calcul (d1) ayant ladite deuxième valeur ($\hat{\Omega}_c$) comme une entrée afin de calculer une première valeur calculée v1, ladite première valeur calculée étant calculable à partir de la relation suivante :

$$v1 = 1 - \cos(2*(\hat{\Omega}_c))$$

- un second dispositif de calcul (d2) ayant la deuxième valeur ($\Omega_c$) comme une entrée afin de calculer une deuxième valeur calculée v2, ladite deuxième valeur calculée étant calculable à partir de la relation suivante :

$$v2 = 1 - \cos(2*(\Omega_c))$$

les moyens de comparaison étant aptes à calculer, à l'aide de la relation suivante, le rapport entre la première valeur calculée et la deuxième valeur calculée, afin de générer le paramètre apte à détecter la présence de propagation à trajets multiples dans le signal numérique modulé:

$$\mu(n) = \frac{v(1)}{v(2)}$$

**9.** Dispositif de détection de la présence de propagation à trajets multiples selon les revendications 7 et 8, dans lequel le signal numérique modulé est un signal FM, lesdits seconds moyens de traitement (5) étant aptes à traiter ledit premier signal et ledit deuxième signal de manière à générer un signal idéal q(n)$\Omega_m$ représentatif de la forme d'onde du signal modulant (q(n)) en appliquant la formule suivante :

$$q(n) \cdot \Omega_m \equiv \frac{1}{2} \cdot \arccos\left(1 - \frac{\Psi\left[s(n+1) - s(n-1)\right]}{2 \cdot \Psi\left[s(n)\right]}\right) - \Omega_c$$

ou
$\psi$[s(n)] est le premier signal,
$\psi$[s(n+1) - s(n-1)] est le deuxième signal.

**10.** Dispositif de détection de la présence de propagation à trajets multiples selon les revendications 7 à 9, dans lequel les moyens de dérivation (3), les premiers moyens de traitement (4), les seconds moyens de traitement (5) ainsi que les moyens de comparaison (6) sont implémentés dans un seul dispositif DSP.

**11.** Dispositif de détection et de suppression de la présence de propagation à trajets multiples selon les revendications 7 à 10, dans lequel le signal numérique modulé est un signal FM, lesdits moyens de traitement étant aptes à traiter ledit premier signal et ledit deuxième signal de manière à générer un signal égalisé $\tilde{q}$ (n) représentatif de la forme d'onde du signal modulant (q(n)) en appliquant la formule suivante:

$$\tilde{q}(n) \cdot \Omega_m \cong \frac{1}{2} \cdot \arccos_\mu \left( 1 - \frac{\Psi\left[ s(n+1) - s(n-1) \right]}{2 \cdot \Psi\left[ s(n) \right]} \right) - \Omega_c$$

où

- $\arccos_\mu$ est l'arc cosinus modifié qui dépend de la valeur de $\mu(n)$ et qui résout l'équation $\alpha \equiv \arccos_\mu (1 - \mu + \mu.\cos\alpha)$,
- $\Omega_m$ est la déviation connue de fréquence angulaire dudit signal modulant.

12. Récepteur pour recevoir un signal radiofréquence analogique (s(t)), comprenant des moyens convertisseurs analogique/numérique aptes à recevoir ledit signal analogique comme une entrée et à convertir ledit signal analogique en un signal numérique modulé, ledit récepteur étant **caractérisé en ce qu'**il comprend un dispositif de détection et de suppression de la présence de propagation à trajets multiples dans ledit signal numérique modulé, ledit signal numérique modulé étant reçu avec une fréquence angulaire de canal ($\Omega_c$) prédéterminée, ledit dispositif de détection de la présence de propagation à trajets multiples étant selon l'une des revendications 7 à 11.

13. Dispositif multimédia portable comprenant:

- une unité centrale et une pluralité de circuits, ladite unité centrale étant apte à commander le fonctionnement de la pluralité de circuits et ladite pluralité de circuits comprenant au moins une interface choisie dans le groupe comprenant une interface vidéo, une interface clavier, une interface de communication, une interface de saisie par stylo, une interface audio ou une combinaison de ceux-ci,
- au moins une antenne apte à recevoir un signal radiofréquence analogique,
- un récepteur dans lequel au moins un signal est couplé à ladite au moins une antenne de réception du signal radiofréquence analogique, ledit récepteur étant selon la revendication 12.

14. Produit informatique qui peut être chargé directement dans la mémoire d'un dispositif de traitement numérique, comprenant des portions de code de programme qui peuvent mettre en oeuvre le procédé selon l'une quelconque des revendications 1 à 6 lorsqu'elles sont exécutées sur ledit dispositif de traitement.

FIG.1

s(n),s'(n)

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040042571 A
- US 20050276365 A

- EP 1259009 A

**Non-patent literature cited in the description**

- **JAMES F. KAISER.** On a Simple Algorithm to Calculate the Energy of a Signal. *PROC. ICASSP,* 1990, vol. S7.3, 381-384

- **P. MARAGOS ; J.F. KAISER ; T.F. QUATIERI.** Energy Separation in Signal Modulations with Application to Speech Analysis. *IEEE Trans. on Signal Proc,* October 1993, vol. 41 (10), 3025-3051